# FASCICULE DE BREVET EUROPEEN

(11) **EP 3 107 176 B1**
(45) Date de publication et mention de la délivrance du brevet: **04.04.2018**
(21) Numéro de dépôt: 15194451.9
(22) Date de dépôt: 13.11.2015
(51) Int. Cl.: H02J 5/00

(54) **PROCÉDÉ DE GESTION D'UN TRANSFERT SANS CONTACT D'ÉNERGIE D'UN ÉMETTEUR VERS UN RÉCEPTEUR, ET ÉMETTEUR CORRESPONDANT**
VERFAHREN ZUR VERWALTUNG EINES KONTAKTLOSEN ENERGIETRANSFERS VON EINEM SENDER ZU EINEM EMPFÄNGER, UND ENTSPRECHENDER SENDER
METHOD FOR MANAGING A WIRELESS POWER TRANSFER FROM AN EMITTER TO A RECEIVER, AND CORRESPONDING EMITTER

(30) Priorité: 18.06.2015 FR 1555568
(43) Date de publication de la demande: 21.12.2016
(73) Titulaire: STMicroelectronics (Grand Ouest) SAS, 72100 Le Mans (FR)
(72) Inventeur: CIMAZ, Lionel, 35137 PLEUMELEUC (FR)
(74) Mandataire: Casalonga

(56) Documents cités:
- EP-A2- 2 779 358
- WO-A1-2013/098240
- JP-B2- 3 392 016
- US-A1- 2009 174 264

## Description

Des modes de mise en oeuvre et de réalisation de l'invention concernent le transfert sans contact d'énergie d'un émetteur vers un récepteur, par exemple mais non limitativement pour alimenter un composant du récepteur ou pour recharger une batterie de celui-ci.

La technologie de chargement sans contact permet de transférer sans contact de l'énergie à partir d'une source d'énergie (par exemple un chargeur) vers une charge, par exemple un appareil de communication sans fil, par exemple un téléphone mobile cellulaire, à travers l'espace d'air séparant le chargeur et la charge.

Parmi les différentes normes de chargement sans contact existantes, on peut citer la norme Qi développée par le « Wireless Power Consortium » (WPC), bien connue de l'homme du métier et notamment, la version faible puissance (« low power ») pouvant délivrer une puissance jusqu'à 5W.

A toutes fins utiles, l'homme du métier pourra se référer au document intitulé « System Description Wireless Power Transfer » volume I : Low Power, Part 1 : Interface Définition, Version 1.1.2, juin 2013.

En bref, l'énergie sans contact est transférée depuis une station de base ou émetteur vers un récepteur magnétiquement couplé à l'émetteur par l'intermédiaire par exemple de bobines.

Le transfert d'énergie repose sur un champ magnétique généré par l'émetteur et capturé par le récepteur.

La norme Qi autorise différentes techniques (topologies) pour générer le champ magnétique du côté de l'émetteur. Mais, ce champ magnétique est toujours un champ oscillant et la plage de fréquences est comprise entre 110 KHz et 205 KHz.

La façon dont est généré le champ magnétique et la façon dont la puissance varie dépend de la topologie utilisée du côté émetteur.

Le récepteur convertit ce champ magnétique en un potentiel électrique utilisé pour charger les batteries ou alimenter un dispositif.

De façon à pouvoir réguler et sécuriser le système, un canal de communication existe entre le récepteur et l'émetteur.

Le récepteur mesure la puissance qu'il reçoit et la compare à la puissance qui lui est nécessaire. La différence entre ces deux valeurs de puissance est une erreur de régulation.

Cette erreur de régulation est transmise à l'émetteur en utilisant le canal de communication et l'émetteur adapte la puissance du champ transmis compte tenu de l'erreur de régulation reçue.

La communication du récepteur vers l'émetteur est basée sur une modulation du champ magnétique résultant d'une variation de la charge aux bornes de l'antenne du récepteur.

L'émetteur peut mesurer cette variation de charge pour en déduire les bits transmis et finalement le message transmis.

L'émetteur comprend de façon classique, un système résonant inductif capacitif dans lequel l'élément inductif est également la bobine qui génère le champ magnétique. Ce système résonant est excité par un circuit de pilotage (« driver ») qui forment ensemble un circuit résonant à découpage.

La modulation du champ magnétique effectuée par le récepteur pour communiquer avec l'émetteur conduit à une variation de tension aux bornes du circuit résonant et à une variation du courant circulant dans ce circuit résonant.

Aussi, actuellement, une première solution pour démoduler le canal de communication récepteur-émetteur consiste à mesurer cette variation de tension du circuit résonant.

Cependant, une telle solution nécessite de nombreux composants et elle est sensible aux bruits de tension provenant de la charge récepteur.

Une autre solution consiste à mesurer le courant circulant dans le circuit résonant.

Cependant, là encore, une telle solution nécessite de nombreux composants, elle est également sensible aux bruits de courant provenant de la charge récepteur, et l'insertion d'une interface de mesure de courant diminue l'efficacité et peut être critique à réaliser.

Le document EP 2 779 358 A2 divulgue un système de charge sans contact comprenant un émetteur d'énergie et un récepteur d'énergie. L'émetteur comporte une bobine de transmission qui convertit un signal de pilotage provenant d'un circuit de pilotage en un champ magnétique alternatif. Le récepteur comporte une bobine de réception générant un signal alternatif à partir dudit champ magnétique, et un redresseur configuré pour générer une tension redressée de façon à charger des batteries.

Selon un mode de mise en oeuvre et de réalisation, il est proposé une autre solution pour démoduler le canal de communication récepteur-émetteur qui offre une meilleure efficacité à moindre coût tout en étant moins complexe à réaliser et offrant une meilleure immunité au bruit récepteur.

Selon un mode de mise en oeuvre et de réalisation, il est proposé de démoduler la communication provenant du récepteur en mesurant la variation de fréquence de commande du circuit résonant à découpage.

Différents aspects et modes de mise en oeuvre et de réalisation de l'invention sont définis dans les revendications 1 à 6.

Ainsi, selon un aspect, il est proposé un procédé de gestion d'un transfert sans contact d'énergie d'un émetteur vers un récepteur mutuellement couplés, le procédé comprenant une génération par l'émetteur d'un champ magnétique à partir d'une commande à une fréquence de commande d'un circuit résonant à découpage, une communication d'informations par le récepteur comportant une modulation du champ magnétique, une détection par l'émetteur de ladite modulation de façon à extraire lesdites informations et un ajustement de ladite fréquence de commande en fonction des informations reçues.

Selon une caractéristique générale de cet aspect, la détection de la modulation comprend une détection des variations de la fréquence de commande.

Selon un mode de mise en oeuvre, la commande du circuit résonant à découpage est effectuée par l'intermédiaire d'un signal de commande interne à une boucle oscillante auto-entretenue à ladite fréquence de commande, cette boucle incorporant le circuit résonant à découpage ; le signal de commande est un signal retardé résultant d'une détection des changements de pente d'un signal interne au circuit résonant et la détection des variations de ladite fréquence de commande comprend une détermination de la période du signal de commande.

L'ajustement de la fréquence de commande, qui permet de délivrer plus ou moins de puissance au récepteur, est avantageusement effectué par un ajustement de la valeur du retard du signal retardé.

Comme l'émetteur comporte une boucle auto-oscillante, une telle solution est sensible à l'impédance du récepteur. Ainsi, en fonction de l'emplacement du récepteur par rapport à l'émetteur, le système peut ne pas naturellement fonctionner à une fréquence constante, ce qui peut être problématique dans certaines applications, pour transférer la puissance adéquate.

Aussi, est-il avantageux de prévoir une seconde boucle plus lente.

En d'autres termes, selon un mode de mise en oeuvre, l'ajustement de la séquence de commande comprend une détermination d'une moyenne des périodes de signal de commande, une différence entre cette moyenne et une période cible et un ajustement dudit retard en fonction du résultat de cette différence.

Ainsi, avec un tel mode de mise en oeuvre, on peut détecter les variations de fréquence liées à la modulation du champ par le récepteur tout en fonctionnant, en moyenne, à une fréquence définie correspondant à la puissance transmise souhaitée.

Selon un autre aspect, il est proposé un émetteur, comprenant un circuit résonant à découpage destiné à être couplé à une antenne d'un récepteur pour un transfert sans contact d'énergie de l'émetteur vers le récepteur, des moyens de gestion dudit transfert comportant des moyens de génération pour générer un champ magnétique à partir d'une commande à une fréquence de commande du circuit résonant à découpage, des moyens de détection pour détecter une modulation du champ magnétique représentative d'informations communiquées par le récepteur en vue d'en extraire lesdits informations, et des moyens de traitement configurés pour ajuster ladite fréquence de commande en fonction desdites informations reçues.

Selon une caractéristique générale de cet autre aspect, les moyens de détection sont configurés pour détecter des variations de la fréquence de commande.

Selon un mode de réalisation, les moyens de génération comprennent une boucle oscillante auto-entretenue à ladite fréquence de commande incorporant ledit circuit résonant à découpage, un module de détection de pente configuré pour détecter des changements de pente d'un signal interne au circuit résonant et délivrer un signal intermédiaire, un moyen de retard ajustable connecté à la sortie du module de détection de pente pour retarder le signal intermédiaire et délivrer un signal de commande du circuit résonant à découpage, et les moyens de détection comprennent des moyens de détermination de la période dudit signal de commande.

Selon un mode de réalisation, les moyens de traitement sont configurés pour ajuster la valeur du retard du moyen de retard.

Selon un mode de réalisation, les moyens de traitement comportent un module de moyennage configuré pour effectuer une détermination d'une moyenne desdites périodes du signal de commande, et un module soustracteur configuré pour effectuer une différence entre cette moyenne et une période cible de façon à ajuster la valeur de retard du moyen de retard en fonction du résultat de ladite comparaison.

D'autres avantages et caractéristiques de l'invention apparaîtront à la description détaillée de modes de mise en oeuvre et de réalisation, nullement limitatifs, et des dessins annexés sur lesquels :

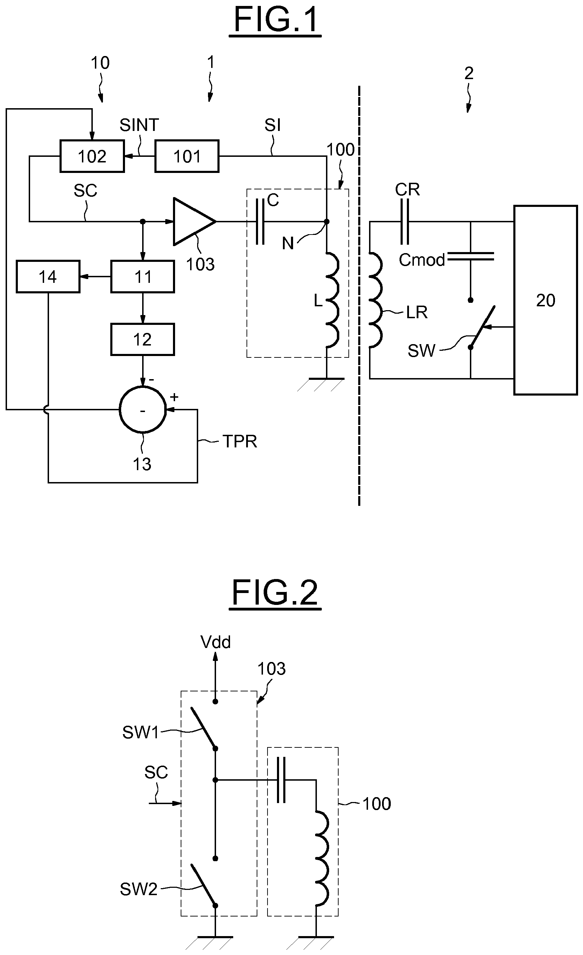

- les figures 1 à 3 illustrent schématiquement des modes de réalisation et de mise en oeuvre de l'invention.

L'invention va maintenant être décrite plus précisément dans le cadre de la norme Qi mais n'est aucunement limitée à cet exemple particulier et peut s'appliquer notamment à tout domaine dans lequel il y a un couplage magnétique entre un émetteur et un récepteur, l'émetteur pilotant une porteuse de puissance à destination du récepteur en utilisant ce couplage magnétique, et le récepteur modulant lui-même la porteuse pour communiquer avec l'émetteur.

Sur la figure 1, la référence 1 désigne un émetteur, par exemple une station de base ou un chargeur et la référence 2 désigne un récepteur, magnétiquement couplé à l'émetteur, par exemple un téléphone mobile cellulaire, en vue d'un transfert d'énergie depuis l'émetteur vers le récepteur pour par exemple recharger une batterie de ce dernier ou alimenter un composant ou dispositif logé à l'intérieur du récepteur.

L'émetteur 1 comporte un circuit résonant 100, inductif capacitif, comportant un élément capacitif C connecté à un élément inductif L, tel qu'une bobine, lui-même connecté à la masse. Ce circuit résonant est piloté par un circuit de pilotage (« driver ») 103. L'ensemble circuit résonant 100-circuit de pilotage 103, forme un circuit résonant à découpage.

A titre d'exemple non limitatif, un mode de réalisation d'un circuit de pilotage 103 est illustré sur la figure 2. Il comporte ici deux interrupteurs, tels que par exemple des transistors MOS, SW1 et SW2 connectés en série entre la tension d'alimentation Vdd et la masse. Ces deux interrupteurs, formant un demi pont, sont pilotés par un signal de commande SC comportant une alternance de niveaux hauts et de niveaux bas. Le signal de commande SC a une fréquence de commande.

Bien entendu, d'autres modes de réalisation d'un circuit de pilotage 103 sont possibles, comme par exemple un montage en pont complet.

Le signal SI, qui est le signal interne au circuit résonant présent au noeud oscillant N, qui est commun à l'élément capacitif C et à l'élément inductif L, est un signal oscillant, autour de la masse dans le cas présent. La période de ce signal SI correspond à la fréquence du signal de commande SC.

Ce signal SI est délivré à un détecteur de pente 101 configuré pour détecter les changements de pente du signal interne SI.

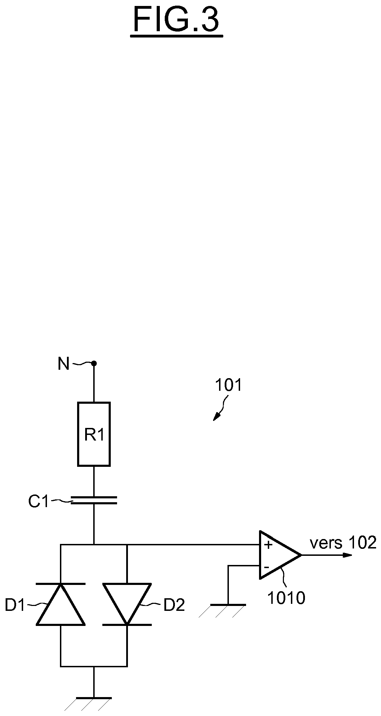

Ce détecteur de pente est donc ici un détecteur quart d'onde dont un exemple de réalisation est illustré schématiquement sur la figure 3.

Il comporte ici une résistance R1 en série avec un condensateur C1 formant un filtre RC connecté au noeud oscillant N. Ce filtre RC permet de filtrer d'éventuels bruits.

La sortie du filtre RC est connectée d'une part à l'entrée + d'un comparateur 1010 et d'autre part à la masse par l'intermédiaire de deux diodes D1 et D2 montées tête bêche.

L'entrée - du comparateur 1010 est connectée ici à la masse et la sortie du comparateur est la sortie du détecteur de pente.

La sortie du détecteur de pente, qui délivre le signal intermédiaire SINT, est connectée à l'entrée d'un moyen de retard programmable ou ajustable 102 qui peut être réalisé dans le domaine numérique de façon classique et connue en soi. La valeur du retard est égale à environ un quart de la période du signal de commande SC (correspondant à la période du signal SI présent au noeud N).

La sortie du moyen de retard, qui délivre le signal de commande SC, est rebouclée sur l'entrée de commande du circuit de pilotage 103.

On voit donc ici que l'on a formé au sein de l'émetteur une boucle 10 comportant le circuit résonant à découpage 100, 103, le détecteur de pente 101, et le moyen de retard 102.

En choisissant la polarité adéquate, c'est-à-dire en s'arrangeant pour qu'un niveau haut du signal de commande SC ferme l'interrupteur SW1 connecté à la tension d'alimentation Vdd et qu'un niveau bas du signal de commande SC ferme l'interrupteur SW2 reliant le circuit résonant à la masse, la boucle 10 est auto-oscillante.

Par ailleurs, la fréquence d'oscillation de la boucle se situe au-dessus de la fréquence de résonance du circuit résonant 100, ce qui permet d'obtenir avantageusement une inversion de tension automatique lors de la connexion à la masse ou à la tension d'alimentation (Vdd) du circuit oscillant 100.

L'ajustement de la valeur du retard du moyen de retard 102 permet d'ajuster la valeur de l'énergie transmise vers le récepteur.

Avant de revenir plus en détail sur le fonctionnement de ce système, on va décrire la structure côté récepteur 2.

Celui-ci comporte également un circuit inductif capacitif comportant un élément inductif LR, par exemple une bobine, couplée à la bobine L du circuit 100, et un élément capacitif CR.

Les différents composants et notamment la batterie du récepteur 2 sont désignés globalement sous la référence 20 et comportent notamment un pont redresseur (non représenté ici à des fins de simplification) connecté aux bornes du circuit inductif capacitif LR, CR.

Le récepteur 2 comporte également un condensateur de modulation Cmod, commutable par l'intermédiaire d'un interrupteur SW, par exemple un transistor MMOS, l'ensemble étant connecté aux bornes du circuit inductif capacitif LR, CR.

La communication entre le récepteur 2 et l'émetteur 1 s'effectue par une modulation du champ magnétique émis par l'émetteur 1 via la bobine L. Cette modulation s'effectue ici en connectant ou déconnectant le condensateur de modulation Cmod du récepteur. Ainsi, la connexion du condensateur Cmod va légèrement modifier la valeur capacitive totale au niveau du circuit résonant 100.

Et, cette modification de valeur capacitive va produire une variation de fréquence du signal de commande SC produit par la boucle 10.

La détection de cette variation de fréquence va permettre de démoduler le canal de communication récepteur-émetteur et donc d'en extraire les données et messages transmis par le récepteur à l'émetteur, relatifs notamment à l'erreur de régulation de puissance.

Plus précisément, la détection des variations de la fréquence de commande du signal SC comprend une détermination de la période de ce signal de commande SC.

Cette détermination peut s'effectuer à l'aide d'un bloc chronomètre 11 qui peut être réalisé dans le domaine numérique en utilisant par exemple un compteur.

La valeur de la période du signal de commande, mesurée par le chronomètre 11, est délivrée à des moyens de traitement, par exemple un microcontrôleur 14 qui en déduit une connexion ou non du condensateur Cmod, et par conséquent la valeur logique du bit transmis par le récepteur.

Ainsi, à titre indicatif, si le condensateur Cmod est effectivement connecté (interrupteur SW fermé) conduisant à une variation de la période du signal SC, on peut par exemple alors considérer qu'un « 1 » logique est transmis. Dans le cas contraire, c'est-à-dire en l'absence de variation de fréquence, correspondant à une déconnexion du condensateur Cmod (interrupteur SW ouvert), un « 0 » logique est supposé être transmis.

Comme indiqué ci-avant, la communication du récepteur vers l'émetteur permet par exemple de transmettre un message indiquant si la puissance transmise est suffisante ou non.

A la lecture de ce message, le microcontrôleur 14 peut alors ajuster la valeur du retard 102 de façon à modifier la fréquence du signal de commande SC.

Bien entendu, la fréquence de commutation du condensateur Cmod, et par conséquent la variation de fréquence, est avantageusement bien inférieure à la fréquence du signal de commande SC. A titre indicatif, pour un système opérant à 110 KHz, ce qui correspond à une période du signal de commande de 9,1 microsecondes, on pourra choisir une durée de commutation ou de non commutation de l'interrupteur SW de l'ordre de 500 microsecondes. Ainsi, le condensateur Cmod restera connecté ou non connecté pendant au moins 50 périodes du signal SC ce qui est largement suffisant pour déterminer la variation de fréquence.

Etant donné que l'émetteur se comporte comme un oscillateur, une telle solution est sensible à l'impédance du récepteur. En effet, en fonction de l'emplacement du récepteur par rapport à l'émetteur, le système ne va pas naturellement opérer à une fréquence constante, ce qui peut être problématique dans certains cas pour transférer l'énergie adéquate.

Aussi, est-il prévu de former une seconde boucle plus lente. Plus précisément, on détermine, à l'aide d'un bloc de moyennage 12, la moyenne des périodes du signal de commande SC et l'on effectue une différence entre cette moyenne et une période cible TPR, calculée par le microcontrôleur 14, dans un soustracteur 13.

Le résultat de cette différence, rebouclé sur le moyen de retard 102, permet d'ajuster la valeur du retard du moyen de retard 102.

Avec ces deux boucles, on peut alors détecter les variations de fréquence liées à la modulation du champ magnétique effectuée par le récepteur tout en fonctionnant, en moyenne, à une fréquence définie.

A titre d'exemple, en utilisant
une bobine ayant une valeur inductive de 6,3 µH et un élément capacitif C ayant une valeur capacitive de 400 nF, ce qui correspond à des exemples de valeurs compatibles avec le norme Qi,
un condensateur Cmod d'une valeur de 10 nanofarads, un facteur de couplage émetteur/récepteur allant de 0,5 à 0,9, et
une charge pouvant aller jusqu'à 5 W du côté récepteur,
on obtient un système capable d'opérer à une fréquence allant de 110 KHz à 200 KHz tout en étant capable de détecter des variations de fréquence de 2 KHz à 5 KHz, ce qui est aisément détectable par un chronomètre numérique.

## Revendications

1. Procédé de gestion d'un transfert sans contact d'énergie d'un émetteur (1) vers un récepteur (2) mutuellement couplés, comprenant une génération par l'émetteur (1) d'un champ magnétique à partir d'une commande à une fréquence de commande d'un circuit résonant à découpage (100, 103), une communication d'informations par le récepteur (2) comportant une modulation dudit champ magnétique, une détection par l'émetteur de ladite modulation de façon à extraire lesdites informations et un ajustement de ladite fréquence de commande en fonction desdites informations reçues, **caractérisé en ce que** ladite détection de la modulation comprend une détection (11, 14) des variations de la fréquence de commande, et **en ce que** la commande du circuit résonant à découpage est effectuée par l'intermédiaire d'un signal de commande (SC) interne à une boucle oscillante (10) auto-entretenue à ladite fréquence de commande incorporant ledit circuit résonant à découpage (100, 103), le signal de commande (SC) étant un signal retardé résultant d'une détection des changements de pente d'un signal (SI) interne au circuit résonant, et la détection des variations de ladite fréquence de commande comprend une détermination de la période dudit signal de commande (SC).

2. Procédé selon la revendication 1, dans lequel l'ajustement de ladite fréquence de commande comprend un ajustement du retard dudit signal retardé (SC).

3. Procédé selon l'une des revendications 1 ou 2, dans lequel l'ajustement de ladite fréquence de commande comprend une détermination d'une moyenne desdites périodes du signal de commande (SC), une différence entre cette moyenne et une période cible (TPR) et un ajustement dudit retard en fonction du résultat de ladite différence.

4. Emetteur, comprenant un circuit résonant à découpage (100, 103) destiné à être couplé à une antenne d'un récepteur (2) pour un transfert sans contact d'énergie de l'émetteur (1) vers le récepteur (2), des moyens de gestion dudit transfert comportant des moyens de génération (10) pour générer un champ magnétique à partir d'une commande à une fréquence de commande du circuit résonant à découpage, des moyens de détection (11) pour détecter une modulation du champ magnétique représentative d'informations communiquées par le récepteur en vue d'en extraire lesdites informations, et des moyens de traitement (14) configurés pour ajuster ladite fréquence de commande en fonction desdites informations reçues, **caractérisé en ce que** les moyens de détection (11) sont configurés pour détecter des variations de la fréquence de commande, et **en ce que** les moyens de génération comprennent une boucle oscillante (10) auto-entretenue à ladite fréquence de commande incorporant ledit circuit résonant à découpage, un module de détection de pente (101) configuré pour détecter des changements de pente d'un signal (SI) interne au circuit résonant et délivrer un signal intermédiaire (SINT), un moyen de retard ajustable (102) connecté à la sortie du module de détection de pente pour retarder le signal intermédiaire (SINT) et délivrer un signal de commande (SC) du circuit résonant à découpage, et les moyens de détection comprennent des moyens (11) de détermination de la période dudit signal de commande.

5. Emetteur selon la revendication 4, dans lequel les moyens de traitement (14) sont configurés pour ajuster la valeur du retard du moyen de retard.

6. Emetteur selon l'une des revendications 4 ou 5, dans lequel les moyens de traitement comportent en outre un module de moyennage (12) configuré pour effectuer une détermination d'une moyenne desdites périodes du signal de commande, et un module soustracteur (13) configuré pour effectuer une différence entre cette moyenne et une période cible (TPR) de façon à ajuster la valeur de retard du moyen de retard en fonction du résultat de ladite comparaison.

## Patentansprüche

1. Verfahren zur Verwaltung eines kontaktlosen Energietransfers von einem Sender (1) zu einem Empfänger (2), die miteinander gekoppelt sind, umfassend ein Erzeugen eines Magnetfeldes durch den Sender (1) ausgehend von einem Steuern mit einer Steuerfrequenz einer Resonanzschaltung mit Partitionierung (100, 103), wobei eine Mitteilung von Informationen von dem Empfänger (2), eine Modulation des Magnetfeldes, ein Erfassen der Modulation durch den Sender derart, um die Information zu extrahieren, und ein Einstellen der Steuerfrequenz in Abhängigkeit von den empfangenen Informationen aufweist, **dadurch gekennzeichnet, dass** das Erfassen der Modulation ein Erfassen (11, 14) der Veränderungen der Steuerfrequenz aufweist, und dass das Steuern der Resonanzschaltung mit Partitionierung über ein Steuersignal (SC) im Inneren einer oszillierenden Schleife (10), die auf der Steuerfrequenz selbsterhaltend ist, in die die Resonanzschaltung mit Partitionierung (100, 103) integriert ist, durchgeführt wird, wobei das Steuersignal (SC) ist ein verzögertes Signal ist, das sich aus einem Erfassen der Steigungsänderungen eines Signals (SI) im Inneren der Resonanzschaltung ergibt, und das Erfassen der Veränderungen der Steuerfrequenz ein Bestimmen der Periode des Steuersignals (SC) aufweist.

2. Verfahren nach Anspruch 1, wobei das Einstellen der Steuerfrequenz ein Einstellen der Verzögerung des verzögerten Signals (SC) aufweist.

3. Verfahren nach einem der Ansprüche 1 oder 2, wobei das Einstellen der Steuerfrequenz ein Bestimmen eines Mittelwerts der Perioden des Steuersignals (SC), einer Differenz zwischen diesem Mittelwert und einer Zielperiode (TPR) und ein Einstellen der Verzögerung in Abhängigkeit von dem Ergebnis der Differenz aufweist.

4. Sender, umfassend eine Resonanzschaltung mit Partitionierung (100, 103), die dazu bestimmt ist, mit einer Antenne eines Empfängers (2) für einen kontaktlosen Energietransfer von dem Sender (1) zu dem Empfänger (2) verbunden zu werden, Mittel zur Verwaltung dieses Transfers, umfassend Erzeugungsmittel (10) zum Erzeugen eines Magnetfeldes ausgehend von einem Steuern mit einer Steuerfrequenz der Resonanzschaltung mit Partitionierung, Mittel zum Erfassen (11), um eine Modulation des Magnetfeldes zu erfassen, die für Informationen repräsentativ ist, die von dem Empfänger übermittelt werden, um daraus die Informationen zu extrahieren, und Verarbeitungsmittel (14), die konfiguriert sind, um die Steuerfrequenz in Abhängigkeit von den empfangenen Informationen einzustellen, **dadurch gekennzeichnet, dass** die Mittel zum Erfassen (11) konfiguriert sind, um Veränderungen der Steuerfrequenz zu erfassen, und dass die Mittel zum Erzeugen eine oszillierende Schleife (10), die auf der Steuerfrequenz selbsterhaltend ist, in die die Resonanzschaltung mit Partitionierung integriert ist, ein Modul zum Erfassen der Steigung (101), das konfiguriert ist, um Steigungsänderungen eines Signals (SI) im Inneren der Resonanzschaltung zu erfassen und ein Zwischensignal (SINT) abzugeben, ein einstellbares Verzögerungsmittel (102) aufweisen, das am Ausgang des Moduls zum Erfassen der Steigung angeschlossen ist, um das Zwischensignal (SINT) zu verzögern und ein Steuersignal (SC) der Resonanzschaltung mit Partitionierung abzugeben, und die Mittel zum Erfassen Mittel (11) zum Bestimmen der Periode des Steuersignals aufweisen.

5. Sender nach Anspruch 4, wobei die Verarbeitungsmittel (14) konfiguriert sind, um den Wert der Verzögerung des Verzögerungsmittels einzustellen.

6. Sender nach einem der Ansprüche 4 oder 5, wobei die Verarbeitungsmittel ferner ein Mittelwertbildungsmodul (12), das konfiguriert ist, um ein Bestimmen eines Mittelwerts der Perioden des Steuersignals durchzuführen, und ein Substraktionsmodul (13) aufweisen, das konfiguriert ist, um eine Differenz zwischen diesem Mittelwert und einer Zielperiode (TPR) derart zu bestimmen, um den Verzögerungswert des Verzögerungsmittels in Abhängigkeit von dem Ergebnis des Vergleichs einzustellen.

## Claims

1. Method for managing contactless power transfer from a transmitter (1) to a receiver (2) that are coupled to one another, comprising generation of a magnetic field by the transmitter (1) from a command at a control frequency for a switching resonant circuit (100, 103), communication of information by the receiver (2) involving modulation of said magnetic field, detection of said modulation by the transmitter so as to extract said information and adjustment of said control frequency according to said received information, **characterized in that** said detection of the modulation comprises detection (11, 14) of the variations in the control frequency, and **in that** the switching resonant circuit is controlled by means of a control signal (SC) that is internal to an oscillating loop (10) that maintains itself at said control frequency and incorporates said switching resonant circuit (100, 103), the control signal (SC) being a delayed signal resulting from detection of the changes of slope of a signal (SI) that is internal to the resonant circuit, and the detection of the variations in said control frequency comprises determination of the period of said control signal (SC).

2. Method according to Claim 1, in which the adjustment of said control frequency comprises adjustment of the delay of said delayed signal (SC).

3. Method according to either of Claims 1 and 2, in which the adjustment of said control frequency comprises determination of an average for said periods of the control signal (SC), formation of a difference between this average and a target period (TPR) and adjustment of said delay according to the result of said difference.

4. Transmitter, comprising a switching resonant circuit (100, 103) that is intended to be coupled to an antenna of a receiver (2) for contactless power transfer from a transmitter (1) to the receiver (2), means for managing said transfer having generating means (10) for generating a magnetic field from a command at a control frequency for the switching resonant circuit, detection means (11) for detecting modulation of the magnetic field, which modulation is representative of information communicated by the receiver, for the purpose of extracting said information therefrom, and processing means (14) that are configured to adjust said control frequency according to said received information, **characterized in that** the detection means (11) are configured to detect variations in the control frequency, and **in that** the generating means comprise an oscillating loop (10) that maintains itself at said control frequency and incorporates said switching resonant circuit, a slope detection module (101) that is configured to detect changes of slope of a signal (SI) that is internal to the resonant circuit and to deliver an intermediate signal (SINT), an adjustable delay means (102) that is connected to the output of the slope detection module in order to delay the intermediate signal (SINT) and to deliver a control signal (SC) for the switching resonant circuit, and the detection means comprise means (11) for determining the period of said control signal.

5. Transmitter according to Claim 4, in which the processing means (14) are configured to adjust the value of the delay of the delay means.

6. Transmitter according to either of Claims 5 and 6, in which the processing means moreover have an averaging module (12) that is configured to determine an average for said periods of the control signal, and a subtracting module (13) that is configured to form a difference between this average and a target period (TPR) so as to adjust the delay value of the delay means according to the result of said comparison.
